# EUROPEAN PATENT SPECIFICATION

(11) **EP 1 983 015 B1**
(45) Date of publication and mention of the grant of the patent: **12.03.2014**
(21) Application number: 08006784.6
(22) Date of filing: 03.04.2008
(51) Int. Cl.: C08G 65/00

(54) **High-productivity process for non-phenolic ethoxylates**
Verfahren mit hoher Produktivität für nicht phenolische Ethoxylate
Processus haute productivité pour éthoxylates non phénoliques

(30) Priority: 16.04.2007 US 787338
(43) Date of publication of application: 22.10.2008
(73) Proprietor: Bayer MaterialScience LLC, Pittsburgh, PA 15205 (US)
(72) Inventor: McDaniel, Kenneth G., Charleston WV 25311 (US); Reese, Jack Dr., Hurricane WV 25526 (US)
(74) Representative: Perchenek, Nils

(56) References cited:
- EP-A- 1 927 612
- WO-A-97/29146
- WO-A-98/03571
- WO-A-2006/002807

## Description

### FIELD OF THE INVENTION

The present invention relates in general to polyether production processes and more specifically to high productivity processes for the production of non-phenolic ethoxylates useful in or as surfactants.

### BACKGROUND OF THE INVENTION

The ethoxylates of various fatty alcohols and of alkylphenols are widely used in the soap and detergents industry. The majority of these ethoxylates are produced with either sodium or potassium hydroxide catalyzed processes. Although the processes are well established and have been optimized to reduce production costs, there are certain inherent constraints to using such base-catalyzed processes, including the necessity of relatively long cycle times and high ethylene oxide ("EO") concentrations during the ethoxylation reaction. These are semibatch processes in which the starting alcohol and the base are charged to a reaction vessel and the system is heated to greater than 100°C as water is removed to shift the equilibrium from potassium hydroxide base to the potassium alkoxide base. The reactor is inerted with nitrogen so that the gas phase is maintained in a safe range after the addition of ethylene oxide. The reactors operate at relatively high ethylene oxide pressures in the range of 20 to 60 psia at the completion of ethylene oxide addition.

The current processes are true semibatch processing in which the starting alcohol and catalyst is added and the ethylene oxide is added incrementally in a process controlled by the ability to remove the heat of reaction and the ability to maintain the ethylene oxide in safe operating range. After completion of the ethylene oxide addition, the process continues until the ethylene oxide is consumed and then the catalyst is neutralized with an organic acid to give a soluble potassium or sodium salt that remains in the product. The overall cycle time is the sum of several steps which can be summarized as: starter charge, water removal, ethylene oxide addition, ethylene oxide digestion, stripping to remove any residual oxide and acid neutralization.

With the current KOH process, the amount of time in which oxide is not being added constitutes a relative large proportion of the total reactor time. For example, the starter is charged to the reactor and with a 6.5 EO C₁₃ alcohol product, this amounts to about 40 % of the total material added to the reactor. Potassium hydroxide is subsequently added, usually as an aqueous solution, followed by stripping to remove water and to shift the equilibrium so that the potassium is present as the potassium alkoxide salt of the starter. These process steps have the disadvantages of occupying a significant fraction of the process time, consuming energy and producing a waste stream. After oxide addition is complete, the requirement is to drop to very low levels of residual ethylene oxide, so that the less reactive KOH requires a longer time and the product likely must be stripped to remove residual ethylene oxide.

Although the co-addition of starter and oxide is disclosed by Pazos in U.S. Pat. No. 5,777,177 and in a continuous process by Pazos and Shih (U.S. Pat. No. 5,689,012), these references fail to teach using such processes for the production of surfactants and further fail to disclose the value of an oxide addition step in which no starter is added. Other processes in which oxide and starter are added simultaneously include those described for example in U.S. Pat. No. 7,012,164; U.S. Published Patent Application No. 2003/073873; Kokai JP 06-16806; and WO 03/025045.

The patent art for the production of ethoxylates by semibatch processes includes a large number of disclosures. For example, Clement et al. in U.S. Pat. No. 6,642,423, teach ethoxylation reactions with a double metal cyanide ("DMC") catalyst by feeding a first block of ethylene oxide followed by other blocks of propylene oxide or mixed oxides.

U.S. Pat. No. 6,821,308, issued to Combs et al. discloses oleophilic polyoxyalkylene monoethers having reduced water affinity. Combs et al. teach the alkoxylation of alcohols with DMC catalyst and exemplify propylene oxide, but not ethylene oxide. Eleveld et al., in U.S. Published Patent Application No. 2005/0014979, teach the use of DMC catalyst to prepare ethoxylated alcohols with DMC.

U.S. Published Patent Application No. 2005/0215452, in the name of Ruland et al., teaches C₁₀-alkanol alkoxylate mixtures and processes for their preparation. Example 1 of Ruland et al. discloses the use of DMC catalyst to ethoxylate a 2-propylheptanol with 5 moles of ethylene oxide.

U.S. Published Patent Application No. 2005/0272626, in the name of Wulff et al., teaches processes for the preparation of alkoxylates of the formula RO(A)ₙ(B)ₘH, in the presence of double-metal cyanide compounds. Such alkoxylates are said to be useful as emulsifiers, foam regulators, wetting agents for hard surfaces and in detergents and surfactant formulations. The alkoxylates of Wulff et al. are said to provide better cleaning efficiency with reduced odors.

Grosch et al., in WO 00/14045, teach the preparation of ethoxylates of fatty alcohols using supported DMC catalysts along with propoxylation. WO 01/04178, in the name of Walker et al. gives several examples of ethoxylation. Sherman et al. in WO 05/113640, disclose metal cutting fluids containing alkylene oxide copolymers having low pulmonary toxicity. WO 06/002807, in the name of Ostrowski et al., teaches the production of ethoxylates in a continuous reactor equipped with more than one stage and using an oxide or a mixture of oxides in the second reactor that is different from the first reactor.

Ethoxylated products can be characterized by molecular weight distribution and by the amount of unreacted starter remaining in the product. A typical product having a composition of a C₁₃ alcohol starter and 6.5 moles of ethylene oxide per mole of alcohol will have a polydispersity of about 1.13 and unreacted alcohol content in the range of 2.4 percent. This polydispersity is somewhat wider than would be found with the corresponding propylene oxide alkoxylates. This difference in the distribution is theorized by those skilled in the art to be related to the interactions of the ethoxylate's chain with the potassium cation creating an effect such that alkoxylates react at a higher rate than the unreacted alcohol and the relatives rates of the various alkoxylates are dependent on the amount of ethylene oxide units in the molecule. Thus, from an effectiveness of a unit weight of surfactant perspective, it would be desirable to have narrower molecular weight distribution in many detergent formulations. Instructive in this regard are GB-A-1553561 and K.W. Dillon, Journal of the American Oil Chemists' Society (JAOCS), Vol. 62, no. 7 (July 1985), pp 1144-1151. Although certain catalysts are reported to give narrower distributions, the catalysts and processing costs are reportedly higher and the detergent industry has developed primarily using the wider distribution products.

Thus, there remains a need for improved surfactant production processes. New ethoxylates processes preferably should provide "drop-in products" to avoid the costs of reformulating a wide range of detergents or provide other significant improvements that would offset the reformulation costs.

### SUMMARY OF THE INVENTION

The subject-matter of the present invention is soley defined by the scope of the attached claims 1-24. Any additional subject-matter outside the claims eventually contained herein, merely serves to illustrate the technical context of the invention.

Accordingly, the present invention provides a modified semibatch process to produce non-phenolic ethoxylates useful in or as surfactants. The inventive process involves charging a portion of product from a previous preparation (a "heel") or an ethoxylate to a reactor, optionally, charging from about 0.2 wt.% to an amount equal or greater than the amount of heel of a C₁ - C₅₆ non-phenolic alcohol to the reactor, charging ethylene oxide to activate a double metal cyanide ("DMC") catalyst, adding C₁ - C₅₆ non-phenolic alcohol simultaneously with ethylene oxide for a portion of the process and continuing addition of ethylene oxide following completion of the simultaneous C₁ - C₅₆ non-phenolic alcohol and ethylene oxide addition. The process of the present invention may provide significant improvements in cycle time and safety.

These and other advantages and benefits of the present invention will become apparent from the Detailed Description of the Invention herein below.

### DETAILED DESCRIPTION OF THE INVENTION

The present invention will now be described for purposes of illustration and not limitation. Except in the operating examples, or where otherwise indicated, all numbers expressing quantities, percentages, OH numbers, functionalities and so forth in the specification are to be understood as being modified in all instances by the term "about." Equivalent weights and molecular weights given herein in Daltons (Da) are number average equivalent weights and number average molecular weights respectively, unless indicated otherwise.

The present invention provides a process for the production of an ethoxylate involving charging a portion of product from a previous preparation (a "heel") or an ethoxylate to a reactor, optionally, charging from 0.2 wt.% to an amount equal or greater than the amount of heel of a C₁ - C₅₆ non-phenolic alcohol to the reactor, charging ethylene oxide to activate a double metal cyanide ("DMC") catalyst, adding C₁ - C₅₆ non-phenolic alcohol simultaneously with ethylene oxide for a portion of the process and continuing addition of ethylene oxide following completion of the simultaneous C₁ - C₅₆ non-phenolic alcohol and ethylene oxide addition.

The present invention further provides a process for controlling the polydispersity of an ethoxylate involving charging a portion of product from a previous preparation (a "heel") or an ethoxylate to a reactor, optionally, charging from 0.2 wt.% to an amount equal or greater than the amount of heel of a C₁ - C₅₆ non-phenolic alcohol to the reactor, charging ethylene oxide to activate a double metal cyanide ("DMC") catalyst, adding C₁ - C₅₆ non-phenolic alcohol simultaneously with ethylene oxide for a portion of the process and continuing addition of a set amount of ethylene oxide following completion of the simultaneous C₁ - C₅₆ non-phenolic alcohol and ethylene oxide addition.

The process of the present invention combines the continuous addition of starter ("CAOS") addition of ethylene oxide and non-phenolic alcohol starter with the addition of an ethylene oxide cap in which little or no starter is added. In the inventive process, a small "heel" from a prior polyol preparation remains in the reactor and the initiation of ethylene oxide addition and non-phenolic alcohol starter addition occurs almost simultaneously, thereby eliminating a large period of nonproductive time. As double metal cyanide ("DMC") catalysis is more effective than base catalysis, the time to reduce the ethylene oxide concentration to a very low level is shortened and may altogether avoid the necessity of stripping to achieve the target levels. If the heat exchanger capacity of the reactor is increased, an even greater increase in the productivity of the inventive process may be realized.

Preferred initiators or starters (the terms may be used interchangeably herein) in the inventive processes include non-phenolic alcohols of from 1 to 56 carbon atoms, more preferably from 1 to 26 carbon atoms, and most preferably from 9 to 15 carbon atoms. The non-phenolic alcohol useful in the present invention may have a number of carbon atoms in an amount ranging between any combination of these values, inclusive of the recited values. The non-phenolic alcohol may be a primary, secondary or tertiary alcohol. The non-phenolic alcohol may be a Guerbet alcohol.

Other suitable initiators include alcohols derived from coconut oil, palm oil, soybean oil etc. and hydroxyl-containing materials such as castor oil, hydroxylated vegetable oils, hydroxymethyl stearate and esters such as methyl ricinoleate (derived from castor oil). Other starters include hydroxylated esters such as hydroxyethyl acrylate or hydroxypropyl acrylate.

The processes of the present invention may employ any double metal cyanide ("DMC") catalyst. Double metal cyanide complex catalysts are non-stoichiometric complexes of a low molecular weight organic complexing agent and optionally other complexing agents with a double metal cyanide salt, e.g. zinc hexacyanocobaltate. Suitable DMC catalysts are known to those skilled in the art. Exemplary DMC catalysts include those suitable for preparation of low unsaturation polyoxyalkylene polyether polyols, such as disclosed in U.S. Pat. Nos. 3,427,256; 3,427,334; 3,427;335; 3,829,505; 4,472,560; 4,477,589; and 5,158,922, the entire contents of each of which are incorporated herein by reference. The DMC catalysts more preferred in the process of the present invention are those capable of preparing "ultra-low" unsaturation polyether polyols. Such catalysts are disclosed in U.S. Pat. Nos. 5,470,813 and 5,482,908, 5,545,601, 6,689,710 and 6,764,978, the entire contents of each of which are incorporated herein by reference. Particularly preferred in the inventive process are those zinc hexacyanocobaltate catalysts prepared by the processes described in U.S. Pat. No. 5,482,908.

The DMC catalyst concentration is chosen so as to ensure good control of the ethoxylation reaction under given reaction conditions. The catalyst concentration is preferably from 5 ppm to 1,000 ppm, more preferably in the range of from 10 ppm to 500 ppm, and most preferably in the range from 20 ppm to 100 ppm, based on the final ethoxylate weight. The ethoxylation in the process of the present invention may occur in the presence of DMC catalyst in an amount ranging between any combination of these values, inclusive of the recited values.

The ethoxylates produced by the inventive process preferably have a number average molecular weight of from 150 Da to 20,000 Da, more preferably from 250 Da to 12,000 Da, most preferably from 350 Da to 650 Da. The ethoxylates produced by the inventive process may have a number average molecular weight ranging between any combination of these values, inclusive of the recited values. The ethoxylates produced by the inventive processes may preferably find use in or as surfactants.

The present inventors have found that the cycle time to produce surfactants can be substantially improved by the inventive double metal cyanide catalyst ("DMC") process. In this process, a sufficient amount of the product ("heel") is allowed to remain in the reactor so that the heat exchanger is operable. The amount required will vary with reactor configuration and whether the heat exchanger is internal or external. The catalyst is added to the reactor. (Optionally, the catalyst can be added incrementally based on the amount of ethylene oxide or starter that has been added.) There are two options at this point:
1. charge a small amount of starter and then initiate the reaction by adding ethylene oxide to activate the system (as those skilled in the art are aware, DMC catalysts generally require an activation period; whereas potassium hydroxide and other base catalysts do not require an activation period); or
2. start the ethylene oxide addition prior to the addition of any starter.

After initiation or activation, there is a co-feed of ethylene oxide and non-phenolic alcohol starter. The molar ratio of ethylene oxide/starter during the simultaneous feed of ethylene oxide and alcohol is smaller than the ratio desired for the final product and after the non-phenolic alcohol starter addition is complete, the remainder of the ethylene oxide is added (non-CAOS addition). The inventive reaction sequence is as follows:

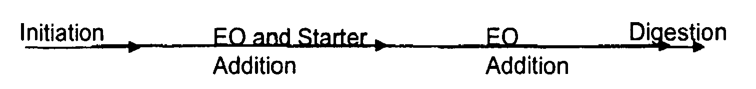

The relative amount of non-CAOS addition is a key to obtaining a given product distribution, i.e., polydispersity. The amount of ethylene oxide divided by the final weight of product produced gives the percentage of non-CAOS addition.

The inventive process offers a number of advantages over the traditional potassium or sodium hydroxide-catalyzed processes. The starter addition step and the water stripping steps may be eliminated, thus resulting in a savings of time and energy that would otherwise be required to heat the starter to stripping temperature. Other improvements include the operation of the reactor at lower ethylene oxide pressures. DMC catalysts are more reactive than basic catalysts and thus the ethylene oxide pressure is relatively low even with DMC catalyst concentrations of less than 100 ppm. Because the pressure is so low at the completion of oxide addition and the system utilizes such a high reactivity catalyst, the digestion time is shorter than that seen with basic catalysis. The combination of these improvements provides a significant improvement in cycle time. The lower ethylene oxide pressure also makes the process inherently safer than the current higher pressure base-catalyzed processes.

Although cycle time is important, as it may be reflected in process costs, it is also important that the product produced by a new process have properties that are similar to those of current products. With the process of the present invention, product may be produced having similar characteristics as the commercial base-catalyzed processes, i.e., having similar polydispersities and unreacted monomer contents. The final ethylene oxide addition step in which no starter is added is a factor in producing such similar products because it reduces the amount of unreacted alcohol and narrows the product molecular weight distribution. The optimum amount of ethylene oxide added in this step will depend on the product being produced, but it is expected that the amount of oxide added in this step is greater than four percent (this percentage is defined as the weight of ethylene oxide added as a cap divided by the weight of the total product produced).

The inventive process is designed to take advantage of one of the unique properties of the DMC catalysts in that DMC catalysts show a preferential affinity for catalyzing the reaction of oxides with lower molecular weight components in preference to higher molecular weight components. This property allows both the reduction of the unreacted starter and a narrowing of the molecular weight distribution. The molecular weight distribution becomes narrower because polyethers in the lower molecular weight region react with some selectivity in comparison with the higher molecular weight polyethers. If a similar process was adapted for use with base catalysis, the narrowing of the molecular weight distribution and reduction of the unreacted alcohol would not occur to the same extent.

### EXAMPLES

The present invention is further illustrated, but is not to be limited, by the following examples. All quantities given in "parts" and "percents" are understood to be by weight, unless otherwise indicated. A two-gallon pressure reactor was equipped with multiple feed systems, process control, heat/cooling capability, safety relief system and vacuum capability. The catalyst used in the Examples was a double metal cyanide ("DMC") catalyst made according to U.S. Pat. No. 5,482,908. A brief description of the overall process used in the Examples follows:
1. charge a portion of product (a "heel") or ethoxylate to the reactor or leave some product in the reactor from previous preparation (also a "heel" herein);
2. optionally, charge from 0.2 wt.% to an amount equal or greater than the amount of heel of starter alcohol to the reactor (may aid in reducing the polydispersity of the product at some molecular weights);
3. charge ethylene oxide and activate catalyst (by starting with some product (heel) in the reactor that has activated catalyst, may observe almost instantaneous activation);
4. for a portion of the process, charge starter alcohol simultaneously with ethylene oxide; and
5. continue ethylene oxide addition after completion of the starter alcohol addition. (non-CAOS).

The following starters were used in the Examples:

| | |
|---|---|
| STARTER A | a blend of C₁₂, C₁₃, C₁₄ and C₁₅ high purity primary alcohols, commercially available from Shell as NEODOL 25; and |
| CONTROL | an ethoxylated linear C₁₂₋₁₃ alcohol with 3 moles (average) of ethylene oxide, commercially available from Tomah³ Products as TOMADOL 23-3. |

### Example 1

The reactor system was purged with nitrogen and evacuated and a 6.5 mole ethoxylate of STARTER A (550 g) was charged to the reactor along with DMC catalyst (0.088 g) to give a final catalyst concentration of 20 ppm of catalyst in the product. The system was stripped for 30 minutes at 130°C and inerted with 30 psia of nitrogen. Ethylene oxide (55 g) was added to activate the catalyst.

After an ethylene oxide pressure decrease was observed, ethylene oxide (2211 g) was charged at a rate of 453 g/hr with a reactor temperature of 130°C and STARTER A (1584 g) was charged in two sequences: 528 g at 317 g/hr and 1056 g at 432 g/hr. With these charge rates, the ethylene oxide feed continued after the alcohol addition was complete. After completion of the oxide addition, the reactor contents were digested at 130°C for 30 minutes. The reactor pressure decreased by about 1 psia indicating an ethylene oxide pressure of about 1 psia.

### Example 2

The procedure given in Example 1 was repeated except that the product from Example 1 was used as the "heel" in the reactor. The amounts of raw materials charged were: 2211 g of ethylene oxide at a feed rate of 453 g/hr and 1584 g of STARTER A (528 g fed at a rate of 317 g/hr and 1056 g fed at a rate of 587 g/hr. The pressure decrease at the end of ethylene oxide addition was about 1 psia.

### Example 3

The procedure given in Example 1 was repeated except that the product from Example 2 was used as the heel in the reactor. The amounts of raw materials charged were: 2211 g of ethylene oxide at a feed rate of 453 g/hr and 1584 g of STARTER A (528 g fed at a rate of 317 g/hr and 1056 g fed at a rate of 838 g/hr. The pressure decrease at the end of ethylene oxide addition was about 1 psia.

As is apparent by reference to Table I below, the product of Example 1 with a 9.5 percent ethylene oxide cap contained 4.3 percent unreacted alcohol which was substantially higher than the commercial control which had 2.4 percent unreacted alcohol. An increase in the ethylene oxide cap to 15.8 and 20 percent decreased the amount of unreacted alcohol so that it was in the same range as the commercial control. The pressure drop at the end of ethylene oxide addition was about 1 psia in these three examples. The amount of unreacted ethylene oxide may be higher in reactors with lower mixing capability.

**Table I**

| | **Non-CAOS amount (%)** | **Unreacted alcohol (%)** | **Polydispersity** |
|---|---|---|---|
| CONTROL | | 2.4 | 1.134 |
| Ex. 1 | 9.5 | 4.3 | 1.2 |
| Ex. 2 | 15.8 | 2.4 | 1.197 |
| Ex. 3 | 20 | 2.6 | 1.18 |

### Example 4 - C₁₃ Alcohol 3 EO

The reactor system was purged with nitrogen and evacuated and a 3 mole ethoxylate of STARTER A (550 g) was charged to the reactor along with DMC catalyst (0.132 g) to give a final catalyst concentration of 20 ppm of catalyst in the product. The system was stripped for 30 minutes at 130°C and then inerted with 30 psia of nitrogen. Ethylene oxide (56 g) was added to activate the catalyst.

After an ethylene oxide pressure decrease was observed, ethylene oxide (2385 g) was charged at a rate of 795 g/hr with a reactor temperature of 130°C along with STARTER A (3614 g) at a rate of 3614 g/hr. With these charge rates, the ethylene oxide feed continued after the alcohol addition was complete. After completion of the oxide addition, the reactor contents were digested at 130°C for 30 minutes. The polydispersity of the product was 1.057. A commercial sample (TOMADOL 23-3) produced by base catalysis exhibited a polydispersity of 1.087.

The polydispersity of the ethoxylate made in this example was narrower than the corresponding potassium hydroxide-produced product. If a wider polydispersity is needed for drop-in performance, the amount of non-CAOS cap may be decreased. The narrow polydispersity may provide an advantage as the product will have less unreacted alcohol than the commercial sample. In applications in which volatile organic compounds ("VOCs") or odors are potential concerns, the narrower polydispersity products would likely be preferred. The non-CAOS cap in this procedure was about 24.6 percent.

### Example 5 - C₁₃ 9EO

The above procedure was followed with exception to the charge factors and charge rates. A C₁₃ alcohol ethoxylate (550 g) was charged to the reactor along with DMC catalyst (0.1 g). After stripping this material, the system was activated by the addition of ethylene oxide (94 g). After activation, ethylene oxide (2894 g) was added at a rate of 579 g/hr and STARTER A (1461 g) was charged at a rate of 487 g/hr. The product had a polydispersity of 1.102 as compared with the polydispersity of the CONTROL (TOMADOL 23-3) from base catalysis of 1.134.

### Examples C6 , 7 - 11

Table II below provides a summary of optimized product to product ("P2P") process 6.5 mole ethylene oxide products.

**Table II**

| **Ex. No.** | **Non-CAOS amount (%)** | **Polydispersity** | **Unreacted alcohol (%)** | **OH No.** |
|---|---|---|---|---|
| C-6 | CONTROL | 1.134 | 2 | 91.6 |
| 7 | zero | 1.18 | 4.01 | 113 |
| 8 | 23 | 1.119 | <1.0 | 96 |
| 9 | 28 | 1.104 | <1.0 | 95.6 |
| 10 | 28 | 1.105 | <1.0 | 112 |
| 11 | 40 | 1.078 | < 1 | |

### Examples C12, 13 and 14

Table III below provides a comparison of a semibatch process with a product to product ("P2P") process for C₁₃ 3 EO.

**Table III**

| **Ex. No.** | **Sample** | **Polydispersity** | **Unreacted alcohol (%)** |
|---|---|---|---|
| C-12 | CONTROL | 1.087 | 11.8 |
| 13 | P2P process with 2 EO as non-CAOS | 1.057 | 5.3 |
| 14 | Semibatch process | 1.029 | 4.3 |

The foregoing examples of the present invention are offered for the purpose of illustration and not limitation. It will be apparent to those skilled in the art that the embodiments described herein may be modified or revised in various ways. The scope of the invention is to be measured by the appended claims.

## Claims

1. A process for the production of an ethoxylate employing a double metal cyanide ("DMC") catalyst comprising:
charging an ethoxylate to a reactor;
charging only ethylene oxide to activate a double metal cyanide ("DMC") catalyst;
adding C₁ - C₅₆ non-phenolic alcohol simultaneously with ethylene oxide for a portion of the process; and
continuing addition of only ethylene oxide following completion of simultaneous C₁ - C₅₆ non-phenolic alcohol and ethylene oxide addition;
wherein the process is not any of process (a) or process (b):
(a) the process of charging a 114-hydroxyl number ethoxylate of a blend of C₁₂, C₁₃, C₁₄ and C₁₅ primary alcohols (NEODOL 25) containing 45ppm of DMC catalyst made according to U.S. Pat. No. 5.482.908 to a one-gallon CSTR stainless steel reactor equipped with a mechanical agitator and to a two-gallon CSTR stainless steel reactor equipped with a mechanical agitator,
heating both reactors slowly,
starting ethylene oxide feed to the one-gallon reactor and setting the ethylene oxide feed at a rate of 16.7 g/min,
after establishing the oxide feed, starting a feed containing NEODOL 25 and 144 ppm DMC catalyst made according to U.S. Pat. No. 5,482,908 at a rate of 23.95 g/min,
when the pressure in the reactor reaches 50 psia, opening a valve at the top of the reactor to a back pressure regulator, allowing the contents of the liquid full reactor to flow out of the reactor,
directing the polyether coming out of the one-gallon reactor into the bottom of the two-gallon reactor,
then starting ethylene oxide feed to the two-galllon reactor at a rate of 16.7 g/min.
passing the polyether coming out of the liquid full two-gallon reactor through a second back pressure regulator and onto a steam-heated line before collecting the polyether in a heated and stirred jacketed vessel,
continuing the ethylene oxide and NEODOL 25 /catalyst feeds for 9 hours,
stropping the feeds to both reactors;
(b) the process of carrying out a process according to (a), continuing the reaction from (a) by re-charging the NEODOL 25 and DMC catalyst vessel with a mixture of NEODOL 25 and DMC catalyst made according to U.S. Pat. No. 5.482.908 that contains 176 ppm catalyst,
restarting the methylene oxide (18.1 g/min) and NEODOL 25 /DMC catalyst mixture (18.9 g/min) feeds to the one-gallon reactor,
restarting the ethylene oxide feed (17.9 g/min) to the two-gallon reactor,
continuously removing the polyether from the two-gallon reactor and collecting the polyether in a manner as described in (a),
continuing the feeds for 9 hours,
stopping the feeds to both reactors.

2. The process according to Claim 1, wherein the C₁ - C₅₆ non-phenolic alcohol is a primary alcohol.

3. The process according to Claim 1, wherein the C₁ - C₅₆ non-phenolic alcohol is a secondary or tertiary alcohol.

4. The process according to Claim 1, wherein the C₁ - C₅₆ non-phenolic alcohol is a Guerbet alcohol

5. The process according to Claim 1, wherein the C₁ - C₅₆ non-phenolic alcohol contains from 1 to 26 carbon atoms.

6. The process according to Claim 1, wherein the C₁ - C₅₆ non-phenolic alcohol contains from 9 to 15 carbon atoms.

7. The process according to Claim 1, wherein the C₁ - C₅₆ non-phenolic alcohol is a monofunctional primary alcohol comprising a mixture of C₁₂ - C₁₅ monofunctional primary alcohols.

8. The process according to Claim 1, wherein the C₁ - C₅₆ non-phenolic alcohol is selected from the group consisting of alcohols derived from coconut oil, palm oil, soybean oil, castor oil, hydroxylated vegetable oils, hydroxymethyl stearate, hydroxyalkyl acrylate and methyl ricinoleate.

9. The process according to Claim 1, wherein the ethoxylate product has a number average molecular weight of from about 150 Da to about 20,000 Da.

10. The process according to Claim 1, wherein the ethoxylate product has a number average molecular weight of from about 250 Da to about 12,000 Da.

11. The process according to Claim 1, wherein the ethoxylate product has a number average molecular weight of from about 350 Da to about 650 Da.

12. The process according to Claim 1, wherein the ethoxylate product has a molecular weight distribution that is essentially equivalent to that of the same ethoxylate product produced by basic catalysis.

13. The process according to Claim 1, wherein the ethoxylate product has a molecular weight distribution that is narrower than that of the same ethoxylate product produced by basic catalysis.

14. A process for controlling the polydispersity of an ethoxylate employing a double metal cyanide ("DMC") catalyst comprising:
charging an ethoxylate to a reactor;
charging only ethylene oxide to activate a double metal cyanide ("DMC") catalyst;
adding C₁ - C₅₆ non-phenolic alcohol simultaneously with ethylene oxide for a portion of the process; and
continuing addition of a set amount of only ethylene oxide following completion of simultaneous C₁ - C₅₆ non-phenolic alcohol and ethylene oxide addition,
wherein the process is not any of process (a) or process (b):
(a) the process of charging a 114-hydroxyl number ethoxylate of a blend or C₁₂, C₁₃, C₁₄ and C₁₅ primary alcohols (NEODOL 25) containing 45 ppm of DMC catalyst made according to U.S. Pat. No. 5,482,908 to a one-gallon CSTR stainless steel reactor equipped with a mechanical agitator and to a two-gallon-CSTR stainless steel reactor equipped with a mechanical agitator,
heating both reactors slowly,
starting ethylene oxide feed to the one-gallon reactor and setting the ethylene oxide feed at a rate of 16.7 g/min,
after establishing the oxide feed, starting a feed containing NEODOL 25 and 144 ppm DMC catalyst made according to U.S. Pat. No. 5,482,908 at a rate of 23.95 g/min,
when the pressure in the reactor reaches 50 psia, opening a valve at the top of the reactor to a back pressure regulator, allowing the contents of the liquid full reactor to flow out of the reactor,
directing the polyether coming out of the one-gallon reactor into the bottom of the two-gallon reactor,
then starting ethylene oxide feed to the two-gallon reactor at a rate of 16.7 g/min,
passing the polyether coming out of the liquid full two-gallon reactor through a second back pressure regulator and onto a steam-heated line before collecting the polyether in a heated and stirred jacketed vessel,
continuing the ethylene oxide and NEODOL 25 /catalyst feeds for 9 hours,
stropping the feeds to both reactors;
(b) the process of carrying out a process according to (a), continuing the reaction from (a) by re-charging the NEODOL 25 and DMC catalyst vessel with a mixture of NEODOL 25 and DMC catalyst made according to U.S. Pat. No. 5,482,908 that contains 176 ppm catalyst,
restarting the ethylene oxide (18.1 g/min) and NEODOL 25 /DMC catalyst mixture (18.9 g/min) feeds to the one-gallon reactor,
restarting the ethylene oxide feed (17.9 g/min) to the two-gallon reactor,
continuously removing the polyether from the two-gallon reactor and collecting the polyether in a manner as described in (a),
continuing the feeds for 9 hours,
stopping the feeds to both reactors.

15. The process according to Claim 14, wherein the C₁ - C₅₆ non-phenolic alcohol is a primary alcohol.

16. The process according to Claim 14, wherein the C₁ - C₅₆ non-phenolic alcohol is a secondary or tertiary alcohol.

17. The process according to Claim 14, wherein the C₁ - C₅₆ non-phenolic alcohol is a Guerbet alcohol

18. The process according to Claim 14, wherein the C₁ - C₅₆ non-phenolic alcohol contains from 1 to 26 carbon atoms.

19. The process according to Claim 14, wherein the C₁ - C₅₆ non-phenolic alcohol contains from 9 to 15 carbon atoms.

20. The process according to Claim 14, wherein the C₁ - C₅₆ non-phenolic alcohol is a monofunctional primary alcohol comprising a mixture of C₁₂ - C₁₅ monofunctional primary alcohols.

21. The process according to Claim 14, wherein the C₁ - C₅₆ non-phenolic alcohol is selected from the group consisting of alcohols derived from coconut oil, palm oil, soybean oil, castor oil, hydroxylated vegetable oils, hydroxymethyl stearate, hydroxyalkyl acrylate and methyl ricinoleate.

22. The process according to Claim 14, wherein the ethoxylate product has a number average molecular weight of from about 150 Da to about 20,000 Da.

23. The process according to Claim 14, wherein the ethoxylate product has a number average molecular weight of from about 250 Da to about 12,000 Da.

24. The process according to Claim 14, wherein the ethoxylate product has a number average molecular weight of from about 350 Da to about 650 Da.

## Patentansprüche

1. Verfahren zum Herstellen eines Ethoxylats unter Verwendung eines Doppelmetallcyanid("DMC")-Katalysators, umfassend:
Füllen eines Ethoxylats in einen Reaktor;
Füllen von nur Ethylenoxid zum Aktivieren eines Doppelmetallcyanid("DMC")-Katalysators;
Zugeben von nichtphenolischem C₁-C₅₆-Alkohol gleichzeitig mit Ethylenoxid während eines Teils des Verfahrens; und
Fortführen des Zugebens von nur Ethylenoxid nach dem Abschluss des gleichzeitigen Zugebens von nichtphenolischem C₁-C₅₆-Alkohol und Ethylenoxid;
wobei das Verfahren keines von Verfahren (a) und Verfahren (b) ist:
(a) das Verfahren des Füllens eines 114-Hydroxyzahl-Ethoxylats eines Gemischs von primären C₁₂-, C₁₃-, C₁₄- und C₁₅-Alkoholen (NEODOL 25), das 45 ppm an DMC-Katalysator, hergestellt gemäß U.S.-Pat. Nr. 5,482,908, enthält, in einen Eingallonen-CSTR-Reaktor aus rostfreiem Stahl, ausgestattet mit einem mechanischen Rührer, und einen Zweigallonen-CSTR-Reaktor aus rostfreiem Stahl, ausgestattet mit einem mechanischen Rührer;
langsames Erwärmen beider Reaktoren,
Beginnen von Ethylenoxid-Zufuhr zu dem Eingallonen-Reaktor und Einstellen der Ethylenoxid-Zufuhr auf eine Rate von 16,7 g/min, nach dem Einrichten der Oxidzufuhr Beginnen einer Zufuhr, die NEODOL 25 und 144 ppm DMC-Katalysator, hergestellt gemäß U.S.-Pat. Nr. 5,482,908, enthält, mit einer Rate von 23,95 g/min,
wenn der Druck in dem Reaktor 50 psia erreicht, Öffnen eines Ventils an der Oberseite des Reaktors zu einem Hinterdruckregler, um zu ermöglichen, dass der Inhalt des flüssigkeitsgefüllten Reaktors aus dem Reaktor ausfließt,
Leiten des Polyethers, der aus dem Eingallonen-Reaktor austritt, in den Boden des Zweigallonen-Reaktors,
dann Beginnen von Ethylenoxid-Zufuhr in den Zweigallonen-Reaktor mit einer Rate von 16,7 g/min,
Leiten des Polyethers, der aus dem flüssigkeitsgefüllten Zweigallonen-Reaktor austritt, durch einen zweiten Hinterdruckregler und auf eine dampfgeheizte Leitung, bevor der Polyether in einem geheizten und gerührten ummantelten Gefäß gesammelt wird,
weitere 9 Stunden Fortsetzen der Ethylenoxid- und NEODOL-25/Katalysator-Zufuhr,
Beenden der Zufuhr zu beiden Reaktoren;
(b) das Verfahren des Durchführens eines Verfahrens gemäß (a), Fortsetzen der Reaktion von (a) durch Wiederbefüllen des NEODOL-25-und-DMC-Katalysator-Gefäßes mit einem Gemisch von NEODOL 25 und DMC-Katalysator, hergestellt gemäß U.S.-Pat. Nr. 5,482,908, das 176 ppm Katalysator enthält,
Wiederbeginnen der Zufuhr von Ethylenoxid (18,1 g/min) und NEODOL 25/DMC-Katalysator-Gemisch (18,9 g/min) zu dem Eingallonen-Reaktor,
Wiederbeginnen der Ethylenoxid-Zufuhr (17,9 g/min) zu dem Zweigallonen-Reaktor,
kontinuierliches Entfernen des Polyethers aus dem Zweigallonen-Reaktor und Gewinnen des Polyethers auf eine wie in (a) beschriebene Weise,
9 Stunden Fortsetzen der Zufuhren,
Beenden der Zufuhr zu beiden Reaktoren.

2. Verfahren gemäß Anspruch 1, wobei der nichtphenolische C₁-C₅₆-Alkohol ein primärer Alkohol ist.

3. Verfahren gemäß Anspruch 1, wobei der nichtphenolische C₁-C₅₆-Alkohol ein sekundärer oder tertiärer Alkohol ist.

4. Verfahren gemäß Anspruch 1, wobei der nichtphenolische C₁-C₅₆-Alkohol ein Guerbet-Alkohol ist.

5. Verfahren gemäß Anspruch 1, wobei der nichtphenolische C₁-C₅₆-Alkohol von 1 bis 26 Kohlenstoffatome enthält.

6. Verfahren gemäß Anspruch 1, wobei der nichtphenolische C₁-C₅₆-Alkohol von 9 bis 15 Kohlenstoffatome enthält.

7. Verfahren gemäß Anspruch 1, wobei der nichtphenolische C₁-C₅₆-Alkohol ein monofunktioneller primärer Alkohol ist, der ein Gemisch von monofunktionellen primären C₁₂-C₁₅-Alkoholen umfasst.

8. Verfahren gemäß Anspruch 1, wobei der nichtphenolische C₁-C₅₆-Alkohol ausgewählt ist aus der Gruppe bestehend aus Alkoholen abgeleitet aus Kokosnussöl, Palmöl, Sojabohnenöl, Castoröl, hydroxylierten Pflanzenölen, Hydroxymethylstearat, Hydroxyalkalacrylat und Methylricinoleat.

9. Verfahren gemäß Anspruch 1, wobei das Ethoxylatprodukt ein anzahlgemitteltes Molekulargewicht von etwa 150 Da bis etwa 20.000 Da aufweist.

10. Verfahren gemäß Anspruch 1, wobei das Ethoxylatprodukt ein anzahlgemitteltes Molekulargewicht von etwa 250 Da bis etwa 12.000 Da aufweist.

11. Verfahren gemäß Anspruch 1, wobei das Ethoxylatprodukt ein anzahlgemitteltes Molekulargewicht von etwa 350 Da bis etwa 650 Da aufweist.

12. Verfahren gemäß Anspruch 1, wobei das Ethoxylatprodukt eine Molekulargewichtverteilung aufweist, die im Wesentlichen zu jener des gleichen Ethoxylatprodukts, hergestellt durch basische Katalyse, äquivalent ist.

13. Verfahren gemäß Anspruch 1, wobei das Ethoxylatprodukt eine Molekulargewichtverteilung aufweist, die schmaler ist als jene des gleichen Ethoxylatprodukts, hergestellt durch basische Katalyse.

14. Verfahren zum Steuern der Polydispersität eines Ethoxylats unter Verwendung eines Doppelmetallcyanid("DMC")-Katalysators, umfassend:
Füllen eines Ethoxylats in einen Reaktor;
Füllen von nur Ethylenoxid zum Aktivieren eines Doppelmetallcyanid("DMC")-Katalysators;
Zugeben von nichtphenolischem C₁-C₅₆-Alkohol gleichzeitig mit Ethylenoxid während eines Teils des Verfahrens; und
Fortführen des Zugebens einer festgelegten Menge von nur Ethylenoxid nach dem Abschluss des gleichzeitigen Zugebens von nichtphenolischem C₁-C₅₆-Alkohol und Ethylenoxid;
wobei das Verfahren keines von Verfahren (a) und Verfahren (b) ist:
(a) das Verfahren des Füllens eines 114-Hydroxyzahl-Ethoxylats eines Gemischs von primären C₁₂-, C₁₃-, C₁₄- und C₁₅-Alkoholen (NEODOL 25), das 45 ppm an DMC-Katalysator, hergestellt gemäß U.S.-Pat. Nr. 5,482,908, enthält, in einen Eingallonen-CSTR-Reaktor aus rostfreiem Stahl, ausgestattet mit einem mechanischen Rührer, und einen Zweigallonen-CSTR-Reaktor aus rostfreiem Stahl, ausgestattet mit einem mechanischen Rührer;
langsames Erwärmen beider Reaktoren,
Beginnen von Ethylenoxid-Zufuhr zu dem Eingallonen-Reaktor und Einstellen der Ethylenoxid-Zufuhr auf eine Rate von 16,7 g/min,
nach dem Einrichten der Oxidzufuhr Beginnen einer Zufuhr, die NEODOL 25 und 144 ppm DMC-Katalysator, hergestellt gemäß U.S.-Pat. Nr. 5,482,908, enthält, mit einer Rate von 23,95 g/min,
wenn der Druck in dem Reaktor 50 psia erreicht, Öffnen eines Ventils an der Oberseite des Reaktors zu einem Hinterdruckregler, um zu ermöglichen, dass der Inhalt des flüssigkeitsgefüllten Reaktors aus dem Reaktor ausfließt,
Leiten des Polyethers, der aus dem Eingallonen-Reaktor austritt, in den Boden des Zweigallonen-Reaktors,
dann Beginnen von Ethylenoxid-Zufuhr in den Zweigallonen-Reaktor mit einer Rate von 16,7 g/min,
Leiten des Polyethers, der aus dem flüssigkeitsgefüllten Zweigallonen-Reaktor austritt, durch einen zweiten Hinterdruckregler und auf eine dampfgeheizte Leitung, bevor der Polyether in einem geheizten und gerührten ummantelten Gefäß gesammelt wird,
weitere 9 Stunden Fortsetzen der Ethylenoxid- und NEODOL-25/Katalysator-Zufuhr,
Beenden der Zufuhr zu beiden Reaktoren;
(b) das Verfahren des Durchführens eines Verfahrens gemäß (a), Fortsetzen der Reaktion von (a) durch Wiederbefüllen des NEODOL-25-und-DMC-Katalysator-Gefäßes mit einem Gemisch von NEODOL 25 und DMC-Katalysator, hergestellt gemäß U.S.-Pat. Nr. 5,482,908, das 176 ppm Katalysator enthält,
Wiederbeginnen der Zufuhr von Ethylenoxid (18,1 g/min) und NEODOL 25/DMC-Katalysator-Gemisch (18,9 g/min) zu dem Eingallonen-Reaktor,
Wiederbeginnen der Ethylenoxid-Zufuhr (17,9 g/min) zu dem Zweigallonen-Reaktor,
kontinuierliches Entfernen des Polyethers aus dem Zweigallonen-Reaktor und Gewinnen des Polyethers auf eine wie in (a) beschriebene Weise,
9 Stunden Fortsetzen der Zufuhren,
Beenden der Zufuhr zu beiden Reaktoren.

15. Verfahren gemäß Anspruch 14, wobei der nichtphenolische C₁-C₅₆-Alkohol ein primärer Alkohol ist.

16. Verfahren gemäß Anspruch 14, wobei der nichtphenolische C₁-C₅₆-Alkohol ein sekundärer oder tertiärer Alkohol ist.

17. Verfahren gemäß Anspruch 14, wobei der nichtphenolische C₁-C₅₆-Alkohol ein Guerbet-Alkohol ist.

18. Verfahren gemäß Anspruch 14, wobei der nichtphenolische C₁-C₅₆-Alkohol von 1 bis 26 Kohlenstoffatome enthält.

19. Verfahren gemäß Anspruch 14, wobei der nichtphenolische C₁-C₅₆-Alkohol von 9 bis 15 Kohlenstoffatome enthält.

20. Verfahren gemäß Anspruch 14, wobei der nichtphenolische C₁-C₅₆-Alkohol ein monofunktioneller primärer Alkohol ist, der ein Gemisch von monofunktionellen primären C₁₂-C₁₅-Alkoholen umfasst.

21. Verfahren gemäß Anspruch 14, wobei der nichtphenolische C₁-C₅₆-Alkohol ausgewählt ist aus der Gruppe bestehend aus Alkoholen abgeleitet aus Kokosnussöl, Palmöl, Sojabohnenöl, Castoröl, hydroxylierten Pflanzenölen, Hydroxymethylstearat, Hydroxyalkalacrylat und Methylricinoleat.

22. Verfahren gemäß Anspruch 14, wobei das Ethoxylatprodukt ein anzahlgemitteltes Molekulargewicht von etwa 150 Da bis etwa 20.000 Da aufweist.

23. Verfahren gemäß Anspruch 14, wobei das Ethoxylatprodukt ein anzahlgemitteltes Molekulargewicht von etwa 250 Da bis etwa 12.000 Da aufweist.

24. Verfahren gemäß Anspruch 14, wobei das Ethoxylatprodukt ein anzahlgemitteltes Molekulargewicht von etwa 350 Da bis etwa 650 Da aufweist.

## Revendications

1. Procédé de production d'un éthoxylate employant un catalyseur de cyanure métallique double (« DMC ») comprenant :
le chargement d'un éthoxylate dans un réacteur ;
le chargement uniquement d'oxyde d'éthylène pour activer un catalyseur de cyanure métallique double (« DMC ») ;
l'ajout d'un alcool non phénolique en C₁-C₅₆ simultanément à l'oxyde d'éthylène pendant une partie du procédé ; et
la poursuite de l'ajout d'uniquement de l'oxyde d'éthylène après la fin de l'ajout simultané d'un alcool non phénolique en C₁-C₅₆ et d'oxyde d'éthylène ;
dans lequel le procédé n'est pas le procédé (a) ou le procédé (b) :
(a) le procédé consistant en le chargement d'un éthoxylate à indice hydroxyle de 114 d'un mélange d'alcools primaires en C₁₂, C₁₃, C₁₄ et C₁₅ (NEODOL 25) contenant 45 ppm d'un catalyseur DMC préparé selon le brevet US n° 5,482,908 dans un réacteur CSTR en acier inoxydable d'un gallon équipé d'un agitateur mécanique et dans un réacteur CSTR en acier inoxydable de deux gallons équipé d'un agitateur mécanique,
le chauffage lent des deux réacteurs,
le démarrage de l'alimentation d'oxyde d'éthylène dans le réacteur d'un gallon et le réglage de l'alimentation d'oxyde d'éthylène à une vitesse de 16,7 g/min,
après l'établissement de l'alimentation d'oxyde, le démarrage d'une alimentation contenant NEODOL 25 et 144 ppm de catalyseur DMC préparé selon le brevet US n° 5,482,908 à une vitesse de 23,95 g/min,
lorsque la pression dans le réacteur atteint 50 psia, l'ouverture d'une vanne en haut du réacteur vers un régulateur de contre-pression, ce qui permet au contenu du réacteur rempli de liquide de s'écouler du réacteur, la direction du polyéther sortant du réacteur d'un gallon dans le fond du réacteur de deux gallons,
puis le démarrage de l'alimentation d'oxyde d'éthylène dans le réacteur de deux gallons à une vitesse de 16,7 g/min,
le passage du polyéther sortant du réacteur de deux gallons rempli de liquide par un second régulateur de contre-pression et dans une conduite chauffée par de la vapeur avant la collecte du polyéther dans une cuve à enveloppe chauffée et agitée,
la poursuite des alimentations d'oxyde d'éthylène et de NEODOL 25/catalyseur pendant 9 heures,
l'arrêt des alimentations des deux réacteurs ;
(b) le procédé consistant en la réalisation d'un procédé selon (a),
la poursuite de la réaction de (a) par rechargement de la cuve de NEODOL 25 et de catalyseur DMC avec un mélange de NEODOL 25 et de catalyseur DMC préparé selon le brevet US n° 5,482,908 qui contient 176 ppm de catalyseur,
le redémarrage des alimentations d'oxyde d'éthylène (18,1 g/min) et de mélange NEODOL 25/catalyseur DMC (18,9 g/min) dans le réacteur d'un gallon,
le redémarrage de l'alimentation d'oxyde d'éthylène (17,9 g/min) dans le réacteur de deux gallons, l'extraction continue du polyéther du réacteur de deux gallons et la collecte du polyéther d'une manière telle que décrite en (a),
la poursuite des alimentations pendant 9 heures, l'arrêt des alimentations des deux réacteurs.

2. Procédé selon la revendication 1, dans lequel l'alcool non phénolique en C₁ à C₅₆ est un alcool primaire.

3. Procédé selon la revendication 1, dans lequel l'alcool non phénolique en C₁ à C₅₆ est un alcool secondaire ou tertiaire.

4. Procédé selon la revendication 1, dans lequel l'alcool non phénolique en C₁ à C₅₆ est un alcool de Guerbet.

5. Procédé selon la revendication 1, dans lequel l'alcool non phénolique en C₁ à C₅₆ contient 1 à 26 atomes de carbone.

6. Procédé selon la revendication 1, dans lequel l'alcool non phénolique en C₁ à C₅₆ contient 9 à 15 atomes de carbone.

7. Procédé selon la revendication 1, dans lequel l'alcool non phénolique en C₁ à C₅₆ est un alcool primaire monofonctionnel comprenant un mélange d'alcools primaires monofonctionnels en C₁₂-C₁₅.

8. Procédé selon la revendication 1, dans lequel l'alcool non phénolique en C₁ à C₅₆ est choisi dans le groupe constitué par les alcools dérivés d'huile de noix de coco, d'huile de palme, d'huile de soja, d'huile de ricin, d'huiles végétales hydroxylées, de stéarate d'hydroxyméthyle, d'acrylate d'hydroxyalkyle et de ricinoléate de méthyle.

9. Procédé selon la revendication 1, dans lequel le produit éthoxylate a un poids moléculaire moyen en nombre d'environ 150 Da à environ 20 000 Da.

10. Procédé selon la revendication 1, dans lequel le produit éthoxylate a un poids moléculaire moyen en nombre d'environ 250 Da à environ 12 000 Da.

11. Procédé selon la revendication 1, dans lequel le produit éthoxylate a un poids moléculaire moyen en nombre d'environ 350 Da à environ 650 Da.

12. Procédé selon la revendication 1, dans lequel le produit éthoxylate a une distribution du poids moléculaire qui est essentiellement équivalente à celle du même produit éthoxylate produit par catalyse basique.

13. Procédé selon la revendication 1, dans lequel le produit éthoxylate a une distribution du poids moléculaire qui est plus étroite que celle du même produit éthoxylate produit par catalyse basique.

14. Procédé de régulation de la polydispersité d'un éthoxylate employant un catalyseur de cyanure métallique double (« DMC ») comprenant :
le chargement d'un éthoxylate dans un réacteur ;
le chargement uniquement d'oxyde d'éthylène pour activer un catalyseur de cyanure métallique double (« DMC ») ;
l'ajout d'un alcool non phénolique en C₁-C₅₆ simultanément à l'oxyde d'éthylène pendant une partie du procédé ; et
la poursuite de l'ajout d'une quantité fixée d'uniquement de l'oxyde d'éthylène après la fin de l'ajout simultané d'un alcool non phénolique en C₁-C₅₆ et d'oxyde d'éthylène ;
dans lequel le procédé n'est pas le procédé (a) ou le procédé (b) :
(a) le procédé consistant en le chargement d'un éthoxylate à indice hydroxyle de 114 d'un mélange d'alcools primaires en C₁₂, C₁₃, C₁₄ et C₁₅ (NEODOL 25) contenant 45 ppm d'un catalyseur DMC préparé selon le brevet US n° 5,482,908 dans un réacteur CSTR en acier inoxydable d'un gallon équipé d'un agitateur mécanique et dans un réacteur CSTR en acier inoxydable de deux gallons équipé d'un agitateur mécanique,
le chauffage lent des deux réacteurs,
le démarrage de l'alimentation d'oxyde d'éthylène dans le réacteur d'un gallon et le réglage de l'alimentation d'oxyde d'éthylène à une vitesse de 16,7 g/min,
après l'établissement de l'alimentation d'oxyde, le démarrage d'une alimentation contenant NEODOL 25 et 144 ppm de catalyseur DMC préparé selon le brevet US n° 5,482,908 à une vitesse de 23,95 g/min,
lorsque la pression dans le réacteur atteint 50 psia, l'ouverture d'une vanne en haut du réacteur vers un régulateur de contre-pression, ce qui permet au contenu du réacteur rempli de liquide de s'écouler du réacteur, la direction du polyéther sortant du réacteur d'un gallon dans le fond du réacteur de deux gallons,
puis le démarrage de l'alimentation d'oxyde d'éthylène dans le réacteur de deux gallons à une vitesse de 16,7 g/min,
le passage du polyéther sortant du réacteur de deux gallons rempli de liquide par un second régulateur de contre-pression et dans une conduite chauffée par de la vapeur avant la collecte du polyéther dans une cuve à enveloppe chauffée et agitée,
la poursuite des alimentations d'oxyde d'éthylène et de NEODOL 25/catalyseur pendant 9 heures,
l'arrêt des alimentations des deux réacteurs ;
(b) le procédé consistant en la réalisation d'un procédé selon (a),
la poursuite de la réaction de (a) par rechargement de la cuve de NEODOL 25 et de catalyseur DMC avec un mélange de NEODOL 25 et de catalyseur DMC préparé selon le brevet US n° 5,482,908 qui contient 176 ppm de catalyseur,
le redémarrage des alimentations d'oxyde d'éthylène (18,1 g/min) et de mélange NEODOL 25/catalyseur DMC (18,9 g/min) dans le réacteur d'un gallon,
le redémarrage de l'alimentation d'oxyde d'éthylène (17,9 g/min) dans le réacteur de deux gallons, l'extraction continue du polyéther du réacteur de deux gallons et la collecte du polyéther d'une manière telle que décrite en (a),
la poursuite des alimentations pendant 9 heures, l'arrêt des alimentations des deux réacteurs.

15. Procédé selon la revendication 14, dans lequel l'alcool non phénolique en C₁ à C₅₆ est un alcool primaire.

16. Procédé selon la revendication 14, dans lequel l'alcool non phénolique en C₁ à C₅₆ est un alcool secondaire ou tertiaire.

17. Procédé selon la revendication 14, dans lequel l'alcool non phénolique en C₁ à C₅₆ est un alcool de Guerbet.

18. Procédé selon la revendication 14, dans lequel l'alcool non phénolique en C₁ à C₅₆ contient 1 à 26 atomes de carbone.

19. Procédé selon la revendication 14, dans lequel l'alcool non phénolique en C₁ à C₅₆ contient 9 à 15 atomes de carbone.

20. Procédé selon la revendication 14, dans lequel l'alcool non phénolique en C₁ à C₅₆ est un alcool primaire monofonctionnel comprenant un mélange d'alcools primaires monofonctionnels en C₁₂-C₁₅.

21. Procédé selon la revendication 14, dans lequel l'alcool non phénolique en C₁ à C₅₆ est choisi dans le groupe constitué par les alcools dérivés d'huile de noix de coco, d'huile de palme, d'huile de soja, d'huile de ricin, d'huiles végétales hydroxylées, de stéarate d'hydroxyméthyle, d'acrylate d'hydroxyalkyle et de ricinoléate de méthyle.

22. Procédé selon la revendication 14, dans lequel le produit éthoxylate a un poids moléculaire moyen en nombre d'environ 150 Da à environ 20 000 Da.

23. Procédé selon la revendication 14, dans lequel le produit éthoxylate a un poids moléculaire moyen en nombre d'environ 250 Da à environ 12 000 Da.

24. Procédé selon la revendication 14, dans lequel le produit éthoxylate a un poids moléculaire moyen en nombre d'environ 350 Da à environ 650 Da.
